# EUROPEAN PATENT SPECIFICATION

(11) **EP 0 451 444 B1**
(45) Date of publication and mention of the grant of the patent: **10.07.1996**
(21) Application number: 91101071.8
(22) Date of filing: 28.01.1991
(51) Int. Cl.: F16K 1/30

(54) **Valve for bottles of liquified petroleum gases**
Ventil für Flüssiggasflaschen
Soupape pour bouteilles à gaz liquéfié

(30) Priority: 10.04.1990 ES 9001199 U
(43) Date of publication of application: 16.10.1991
(73) Proprietor: REPSOL-BUTANO, S.A., E-28015 Madrid (ES)
(72) Inventor: Antunez Jiménez, José, E-28028 Madrid (ES); Vela, Lumbreras, Antonio, E-28033 Madrid (ES)
(74) Representative: Lecce, Giovanni

(56) References cited:
- CH-A- 607 646
- DE-C- 737 483
- FR-A- 506 639
- FR-A- 1 132 374
- GB-A- 958 111
- US-A- 3 981 328

## Description

This invention relates to a valve for bottles of liquified petroleum gases.

This new design of valve for bottles of liquified petroleum gases shows a main advantage in relation to the old designs of valves which are collected and mentioned in the state of the art.

The valves known at present which are mounted in the mouths of the bottles for liquified petroleum gases, known as bottles for butane gas, show the same flow section for the supply than the section of exit of the gas. This exit section cannot be very large, as it would be desirable when bottling, if required to keep the pressure regulator within a reasonable size.

CH-A-607646 discloses a valve assembly for bottles of liquified petroleum gases corresponding to the preamble of claim 1. Also this known valve assembly shows a flow section for the supply equal to that of the exit of the gas.

It is an object of the invention to provide valves which enable a larger gas admission flow inside the bottles by keeping the exit flow constant. According to the present invention, this object is achieved by the features in the characterizing part of claim 1.

Particular embodimends of the invention are set out in dependent claims 2 to 8.

The present invention provides a valve for bottles of liquified petroleum gases the shape of which is defined by a nearby cylindrical body having an upper section with a hollow cylindrical mouth inside which an opening is defined by a hollow cylindrical boss allowing the entrance to a nearly cylindrical inner space housing two rams one of them is external and approximately cylindrical and the other has two outercylindrical subsections and an intermediate prismatic body and further having a lower section, crowned by a fixing hex-nut having on one of its sides a safety valve lowerly followed by a truncated cone like subsection reversed with the revolution surface, threaded, a lower mouth allowing access to a wide cavity.

A valve for bottles of liquified petroleum gases according to this invention shows the main advantage that nothing has been changed in the appearance of the valves, and these have the same configuration as those known, but some of its internal devices have been improved so to enable a gas admission flow at least twice. Therefore, we have an important lowering of the bottling time with the guarantee that the bottle will not show any leakages.

This main advantage is very important in relation to the industries of bottles of liquified gases, because they have better bottling times, and this has no repercussion on users, because the valve keeps the standard external characteristics of the known valves thereby avoiding that users should add any further bottles.

The essential components of this improved valve for bottles of liquified petroleum gases, as far as the appearance concerns, are identical to the previously known ones, showing on the upper side a mouth like a cylindrical hollow with three small bosses in triangular arrangement and located inside, and the base of which has in its center a small hollow cylindrical surface, slightly sloped in the base of which is a circular hole that is the admission of the valve and from which emerges the upper arm of an inner ram the end of which is half-spherical.

Outside near to the mouth is a rubber ring or washer the function of which is adaptable tight locking. The outer vertex of the mouth is chamfered to facilitate the entrance of the regulator.

Inside a circular undercut is provided for the pressure mounting of the bearings shown on the mouth of the regulator. All these components are in the upper sub-body of the valve, while in its lower side, screwed to the upper one, another sub-body is shown crowned by a hex-nut which has in one of its sides a safety valve provided for allowing gas intermittent leakages when extreme dangerous environment conditions exist which cause the overpressure of the gas inside the bottles.

These safety valves operate when the bottle is filled with liquified gas.

An anomalous circumstance which would operate the safety valve can be that the place where the bottle is stocked reaches a very high temperature. This could cause an overpressure inside the bottle which could inflate and burst somewhere letting escape the gas. To avoid these cases the safety valve operates, it makes that when inside the bottles the pressure precisely increases to 25 kg per square centimeter, this internal pressure overcomes the spring shown in the safety valve and let exhaust a quantity of gas which intermittently exits in a stream, until to loose the excess of internal pressure and recover the one that stabilizes the inside of the bottle.

Inside this body external threads have to be screwed to the mouth of the bottle and outside a half-cylindrical hollow with two internal cranks crowned by a small cylindrical cavity in which ends the gas admission and exit valve the improvement of which is referred in the relative claim.

Inside, in the upper sub-body of the valve is a reversed cylindrical hollow, whose outer sides or external revolution surface create another cylindrical hollow between them and the external side of the valve, being these spaces for the flow of the liquified gas when going in and out of the bottle.

In the reversed hollow internal cylindrical body two rams are mounted, one of them is cylindrical hollow with upper chamfered basic edges, showing outer equidistant prismatic ribs defining external wide splines.

This cylindrical ram has in its upper base a central cavity defined by a hollow cylinder projecting externally and internally and defining circular splines around them, in the bottom side, and internally, near to the lower mouth of this hollow cylindrical ram are cylindrical circular splines where a lock ring is attached with a central cylindrical punching. Inside this ram another is defined by a central member in horizontal layout with quadrangular prismatic shape and chamfered apex, and that is crossed by a body or solid cylindrical rod, the ends of which project outside through holes existing in the upper base of the lower side of another cylindrical ram that receives it in its cavity.

It is interesting to remark a member figuring on the upper base of the quadrangular prismatic part with chamfered apex crossed by a cylindrical axis of the internal ram; this is a hollow cylindrical part figuring embedded in the same, around the upper arm of the ram axis. This rubber is basically the gasket acting as lock on the sides of the internal hollow cylinder figuring on the bottom of the outer ram having the aforesaid inner ram.

This inner ram can move up and down inside the cylindrical inner ram, following a fixed and set stroke.

The assembly defined by these two complementary rams and the shape of the cavity of the valve housing them inside are basically the main novelty introduced by this invention.

The operation of the valve is basically as follows:
1. During the process of bleeding of the gas from the bottle, to be used by the users through the regulator, the opening of the valve is determined by a fall of the inner ram of circa 1.25 mm, showing a gas flow section circa 0.9 square millimeters.
2. During the process of injection of the gas in the bottle or filling in the bottling plants, the opening of the valve is determined by a fall of the inner ram of circa 3.5 mm, a position that it has to reach by the bottling heads. This stroke is higher than the 2 mm of gap existing between the inner ram and the lock ring of the outer ram, therefore the latter will be obliged to go with the inner ram in its fall during a stroke circa 1.5 mm. When falling the two rams, the gas flow section is now circa 2 square centimeters.

The stroke of the two rams, and the space that they determine, enable a gas admission flow much higher than the allowed by the former valves, not requiring a bigger regulator, or the change of the dimensions and standard external shapes of the valve, this means less bottling time, in fact, half of the bottling time, reaching in this way a goal aimed by all the valve manufacturers for this sort of bottles.

The obvious advantage is a higher gas supply through the aforesaid rams, with a first stage during which the first ram is operated and moved till the end of its stroke. So that during a second stage falls the second ram housing it, falling down, allowing a larger cavity twice higher than the one of the the known valves.

The gas has basically when entering a first stage or position of the internal mechanisms of the valve where the gas enters with some difficulty in small quantities so that when acting a higher pressure, determines a higher stroke of all the device of the rams admission, and a higher heigth of the admission space, so that the mechanism has two admissions and the flow is clearly higher.

The pressure of the gas in the bottle will keep the valve closed, as this is a self-locking valve.

To enable the invention to be fully understood, it will now be described, by way of example, with reference to the accompanying drawings in which:
- Figure 1: is a side and plan view of the outer cylindrical ram accoring to one embodiment of the invention.
- Figure 2: is a side and plan view of the inner ram which has its stroke inside the hollow cylindrical ram of Figure 1.
- Figure 3: is a partly sectional side view of a section from the valve.

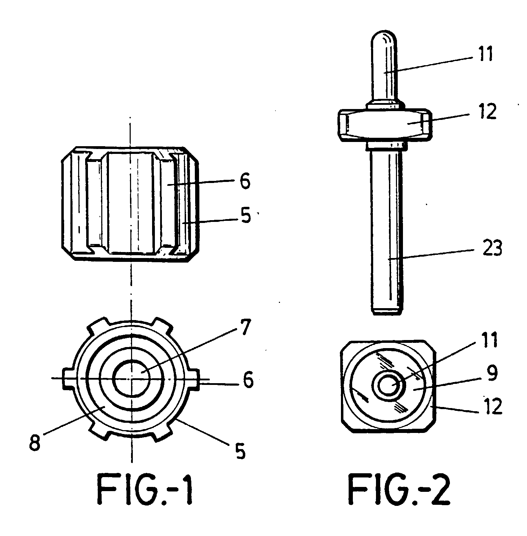

Figures 1 and 2 shows the two rams determining the closing and the opening of the valve. In the side view of Figure 1 the outer appearance of its revolution surface is shown in which prismatic ribs or bosses 6 are symmetrically located, allowing between them wide splines 5.

In the plan view of the upper base with the reference 7 the circular base opening is defined through which the upper branch 11 of an inner ram shown in Figure 2 is introduced. With the reference 8 a cylindrical cavity is indicated defining the outer revolution surface of the ram and the upper branch of the cylindrical wall 10 defining the upper hollow cylindrical opening 7 and housing a rubber gasket.

In Figure 2 with the reference 11 the branch is indicated which projects to the outside through the cylindrical opening 7 of the outer cylindrical ram and the hollow cylindrical opening 14 of the valve. This branch 11 which has a upper blunt end will be pressed by the percussion hammer of the regulator.

The reference 12 indicates an intermediate prismatic body of the ram which is the actual closing member. The apex of this prismatic body is chamfered. The side view of the inner ram shows the lower cylindrical branch 23 located in the same shaft than the upper branch 11, both perpendicular to the intermediate prismatic body 12.

The plan view of this ram shows its bottom surface and like around the vertical branch 11 is an annular ring 9 corresponding to a rubber ring that determines the seat and locking of the ram on the lower wall 10 of the central cylindrical mouth of the outer hollow cylindrical ram that houses it.

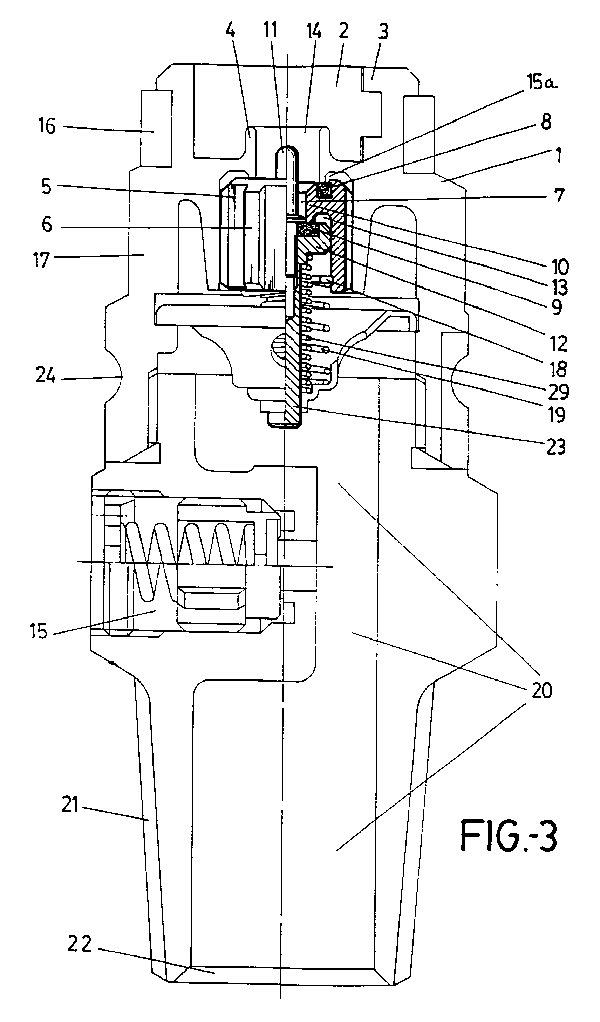

In Figure 3 the reference 1 indicates all the outer case of the valve which keeps the same embodiment than the known previous valve models.

The reference 2 indicates the hollow mouth of the valve. The reference 3 shows the profile of one of the inner bosses figuring in the valve mouth.

The reference 4 indicates the inner hollow cylinder shown in the cavity 2 of the valve serving as entrance of the gas. The end branch 11 of one of the inner rams projects through it.

The reference 16 indicates the rubber cylindrical ring figuring outside near to the mouth which is a member allowing the tightness with the regulator.

The references 5 and 6 indicate the ribs and splines figuring at the outside of the cylindrical ram.

The reference 17 indicates the outer wall and the wall inside which are the rams. The gas flows through the cavities of these rams.

The reference 24 is a circular hollow provided for the mounting of the bearings of the regulator.

The reference 15 is the side safety valve provided to remove the overpressure that could appear inside the bottle.

The reference 21 indicates the threads of the valve for fixing the bottle.

The reference 22 indicates the inner valve mouth which communicates with the bottle and the cavity 20 with the wide admission space, a cranked path and other small upper space communicating with the internal devices of the valve.

The reference 15a indicates an inner cavity existing between the outer cylindrical ram and the hollow cylindrical mouth of the valve which is the length which will allow the flow of the gas after having lowered the double ram.

The reference 7 indicates the opening or cylindrical mouth defined by a cylindrical wall 10.

The reference 13 indicates a space or cavity inside the outer cylindrical ram allowing the flow of the gas after that the inner ram has travelled its descent stroke.

The reference 9 indicates the rubber ring figuring embedded in the intermediate prismatic part 12 of the inner ram.

The reference 18 indicates a lock ring limiting the stroke and independent descent of the inner ram with regard to the outer one.

The references 19 and 29 indicate the springs which hold the rams pressed upwards and therefore the supply of the valves closed.

The reference 23 indicates the lower branch of the preceding ram.

The reference 13 indicates the inner cavity existing between the outer and inner rams 10 and 12.

It is not considered as necessary to extend this specification so that an expert in the art understands the scope of the appended claims. The materials, form, size and arrangement of the components can be altered. The terms used in this specification must be construed in a wide non-restricting sense.

## Claims

1. A valve for bottles of liquified petroleum gases having a shape defined by a nearly cylindrical body (1), said valve consisting of an upper sec tion and a lower section crowned by a fixing hex-nut to the upper section; wherein said upper section comprises a hollow cylindrical mouth or cavity (2), a cylindrical opening (14) defined by an hollow cylinder (4) for the entrance of the gas arranged inside said mouth or cavity (2), a cylindrical inner space communicating with the mouth (2) through said cylindrical opening (14), and an outer hollow cylindrical ram and an inner complementary ram and an inner complementary ram housed in said inner space, said outer ram comprising an upper branch provided with cylindrical wall (10) defining an upper cylindrical opening (7) and with a cylindrical cavity (8) defining the outer revolution surface of the ram and housing a rubber gasket, and wherein the lower section is provided on one of its sides with a safety valve (15) and with a lower mouth allowing access to a wi de cavity, characterized in that the inner ram comprises an upper branch or arm (11) projecting to the cylindrical opening (14) through the cylin drical opening (7) of the outer ram, a lower branch (23) located in the same shaft than the upper branch (11), and an intermediate prismatic body (12) having an annular ring (9) surrounding the branch (11) and corresponding to a rubber ring that determines the seat and locking of the inner ram on the lower wall of the central cylindrical opening (10) of the outer hollow cylindrical ram, and in that a lock ring (18), limiting the stroke and independent descent of the inner ram with respect to the outer ram, is provided in the bottom side, internally and near the lower mouth of the outer ram.

2. The valve according to claim 1, characterized in that the hollow cylindrical mouth (2) is provided with three inner bosses (3), in triangular arrangement, located inside and with a slightly sloped hollow cylindrical surface (4) in its center.

3. The valve according to claim 1 or 2, characterized in that the outer ram is approximately cylindrical with chamfered upper basic edges and provided with prismatic ribs or bosses (6), defined wide splines (5) between them, simmetrically located on its revolution surface.

4. The valve according to claim 3, characterized in that the outer ram is provided on its revolution surface with six ribs or bosses (6).

5. The valve according to anyone of the preceding claims, characterized in that the outer hollow cylindrical ram is provided, internally and near to its lower mouth, with cylindrical circular splines to which the lock ring (18) is attached by a central cylindrical punching.

6. The valve according to anyone of the preceding claims, wherein the branch (11) of the inner ram has an upper blunt end.

7. The valve according to anyone of the preceding claims, wherein the apex of the prismatic body (12) is chamfered.

8. The valve according to anyone of the preceding claims, wherein the upper basic edge of the outer ram is chamfered.

## Patentansprüche

1. Ventil für Flaschen für verflüssigte Erdölgase, das eine durch einen ungefähr zylindrischen Körper (1) bestimmte Form hat und aus einem oberen Abschnitt und einem unteren Abschnitt besteht, der von einer Befestigungssechskantmutter überkront an dem oberen Abschnitt angeschraubt ist, wobei der obere Abschnitt eine hohlzylindrische Mündung oder Aushöhlung (2) aufweist, innerhalb derer eine durch einen Hohlzylinder (4) für den Eintritt des Gases gebildete zylindrische Öffnung (14) angeordnet ist, durch welche ein zylindrischer innerer Raum mit der Mündung (2) in Verbindung steht, in welchem ein äußerer hohlzylindrischer Ventilkolben und ein innerer zusätzlicher Ventilkolben aufgenommen sind, von denen der äußere Ventilkolben einen oberen Bereich aufweist, der mit einer eine obere zylindrische Öffnung (7) bildenden zylindrischen Wand (10) und mit einer zylindrischen Aushöhlung (8) versehen ist, welche die äußere Umlauffläche des Ventilkolbens bildet und eine Gummidichtung aufnimmt, und wobei der untere Abschnitt an einer seiner Seiten mit einem Sicherheitsventil (15) und mit einer unteren Mündung versehen ist, die den Zugang zu einem breiten Hohlraum erlaubt, **dadurch gekennzeichnet**, daß der innere Ventilkolben einen oberen Bereich oder Arm (11), der durch die zylindrische Öffnung (7) des äußeren Ventilkolbens zu der zylindrischen Öffnung (14) hin weist, einen unteren Bereich (23), der im gleichen Schaft wie der obere Bereich (11) angeordnet ist, und einen dazwischen liegenden prismatischen Körper (12) mit einem runden Ringraum (9) aufweist, der den Bereich (11) umgibt und zu einem Gummiring passend ist, der den Sitz und den Verschluß des inneren Ventilkolbens an der unteren Wand der zentralen zylindrischen Öffnung (10) des äußeren hohlzylindrischen Ventilkolbens bestimmt, und daß ein Verschlußring (18), der den Hub und das unabhängige Absenken des inneren Ventilkolbens mit Bezug auf den äußeren Ventilkolben begrenzt, innen an der Unterseite, in der Nähe der unteren Mündung des äußeren Ventilkolbens vorgesehen ist.

2. Ventil nach Anspruch 1, **dadurch gekennzeichnet**, daß die hohlzylindrische Mündung (2) mit drei innenseitig angeordneten inneren Vorsprüngen (3) in dreieckiger Anordnung und mit einer leicht schrägen hohlzylindrischen Fläche (4) in ihrer Mitte versehen ist.

3. Ventil nach Anspruch 1 oder 2, **dadurch gekennzeichnet**, daß der äußere Ventilkolben eine ungefähr zylindrische Form mit angefasten oberen Grundkanten hat und prismatische Rippen oder Vorsprünge (6) aufweist, die zwischen sich breite Nuten (5) bilden und auf seiner Umfangsfläche symmetrisch angeordnet sind.

4. Ventil nach Anspruch 3, **dadurch gekennzeichnet**, daß der äußere Ventilkolben auf seiner Umfangsfläche mit sechs Rippen oder Vorsprüngen (6) versehen ist.

5. Ventil nach einem der vorhergehenden Ansprüche, **dadurch gekennzeichnet**, daß der äußere hohlzylindrische Ventilkolben innenseitig in der Nähe seiner unteren Mündung mit zylindrischen kreisförmigen Nuten versehen ist, in welche mittels eines zentralen zylindrischen Stempels der Verschlußring (18) eingefügt ist.

6. Ventil nach einem der vorhergehenden Ansprüche, **dadurch gekennzeichnet**, daß der Bereich (11) des inneren Ventilkolbens ein abgestumpftes oberes Ende besitzt.

7. Ventil nach einem der vorhergehenden Ansprüche, **dadurch gekennzeichnet**, daß die Kante des prismatischen Körpers (12) angefast ist.

8. Ventil nach einem der vorhergehenden Ansprüche, **dadurch gekennzeichnet**, daß die obere Grundkante des äußeren Ventilkolbens angefast ist.

## Revendications

1. Vanne pour bouteilles de gaz de pétrole liquéfié ayant une forme définie par un corps sensiblement cylindrique (1), cette vanne étant constituée d'une section supérieure et d'une section inférieure reliée par un écrou de fixation hexagonal à la section supérieure, dans laquelle la section supérieure comprend une embouchure ou cavité cylindrique creuse (2), une ouverture cylindrique (14) définie par un cylindre creux (4), pour l'entrée du gaz, disposé à l'intérieur de l'embouchure ou cavité (2), un espace interne cylindrique communiquant avec l'embouchure (2) par l'intermédiaire de l'ouverture cylindrique (14), et un piston cylindrique creux externe et un piston complémentaire interne qui sont logés dans l'espace interne, le piston externe comprenant une branche supérieure pourvue d'une paroi cylindrique (10), définissant une ouverture cylindrique supérieure (7), et d'une cavité cylindrique (8) définissant la surface de révolution externe du piston et logeant un joint en caoutchouc, et dans laquelle la section inférieure est pourvue, sur l'un de ses côtés, d'une soupape de sécurité (15) et d'une embouchure inférieure donnant accès à une large cavité, caractérisée en ce que le piston interne comprend une branche supérieure (11) faisant saillie vers l'ouverture cylindrique (14), à travers l'ouverture cylindrique (7) du piston externe, une branche inférieure (23) située sur la même tige que la branche supérieure (11) et un corps prismatique intermédiaire (12) ayant une bague annulaire (9) entourant la branche (11) et correspondant à un anneau en caoutchouc qui détermine l'appui et le blocage du piston interne sur la paroi inférieure de l'ouverture cylindrique centrale (10) du piston cylindrique creux externe, et en ce qu'un anneau de blocage (18), limitant la course et la descente indépendante du piston interne par rapport au piston externe, est prévu dans le fond de ce piston externe, à l'intérieur et à proximité de l'embouchure inférieure.

2. Vanne suivant la revendication 1 caractérisée en ce que l'embouchure cylindrique creuse (2) est pourvue de trois bossages internes (3) disposés en triangle, situés à l'intérieur, et d'une surface cylindrique creuse (4), légèrement inclinée, en son centre.

3. Vanne suivant l'une des revendications 1 ou 2 caractérisée en ce que le piston externe est approximativement cylindrique avec des arêtes de base supérieures chanfreinées et il est pourvu de nervures ou bossages prismatiques (6), définissant de larges rainures (5) entre eux, disposés symétriquement sur sa surface de révolution.

4. Vanne suivant la revendication 3 caractérisée en ce que le piston externe est pourvu de six nervures ou bossages (6) sur sa surface de révolution.

5. Vanne suivant l'une quelconque des revendications précédentes caractérisée en ce que le piston cylindrique creux externe est pourvu, à l'intérieur et à proximité de son embouchure inférieure, de rainures circulaires cylindriques auxquelles est attaché l'anneau de blocage (18) par un poinçonnage cylindrique central.

6. Vanne suivant l'une quelconque des revendications précédentes caractérisée en ce que la branche (11) du piston interne a une extrémité supérieure émoussée.

7. Vanne suivant l'une quelconque des revendications précédentes caractérisée en ce que le sommet du corps prismatique (12) est chanfreiné.

8. Vanne suivant l'une quelconque des revendications précédentes caractérisée en ce que l'arête de base supérieure du piston externe est chanfreinée.
